# EUROPEAN PATENT APPLICATION

(11) **EP 4 563 048 A1**
(43) Date of publication of application: **04.06.2025**
(21) Application number: 23213659.8
(22) Date of filing: 01.12.2023
(51) Int. Cl.: A47J 43/07

(54) **COOKING DEVICE AND COOKING ASSEMBLY**

(71) Applicant: Versuni Holding B.V., 5656 AE Eindhoven (NL)
(72) Inventor: FLOESSHOLZER, Hannes Uwe, 5656 AE Eindhoven (NL)
(74) Representative: Vollering, Stefanus Franciscus Maria

(57) **Abstract**

Provided is a cooking device (100) for inductively heating a utensil (102) and for driving movement of a utensil mechanical coupling (104). The cooking device comprises an induction heating element (110) for inductively heating the utensil, and a support member (114) for supporting the utensil while the utensil is being inductively heated by the induction heating element. The cooking device also comprises a motor assembly (116), and a device mechanical coupling (118) for engaging with the utensil mechanical coupling to enable the motor assembly to drive movement of the utensil mechanical coupling. The cooking device further comprises at least one magnet (126) for magnetically attracting the utensil and/or the utensil mechanical coupling to facilitate engagement of the utensil mechanical coupling with the device mechanical coupling. Further provided is a cooking assembly (106) comprising the cooking device and one or both of the utensil and the utensil mechanical coupling.

## Description

### FIELD OF THE INVENTION

The invention relates to a cooking device for inductively heating a utensil and for driving movement of a utensil mechanical coupling. The invention further relates to a cooking assembly comprising the cooking device and one or both of the utensil and the utensil mechanical coupling.

### BACKGROUND OF THE INVENTION

Various multipurpose cooking devices are known. Such cooking devices may, for example, have both food manipulation, e.g. food processing, functionality and heating capability.

The heating capability may be provided by an integrated heating element or heat conduction surface. A custom cooking pot may, for example, be mechanically connectable to the cooking device, e.g. via a bayonet coupling, a cradle/holder etc.

A rotatable food implement, in other words a rotatable tool, may be arranged in a center of the cooking pot.

Most multipurpose cooking devices on the market are designed around a single custom cooking pot, which may be the only pot that the cooking device is compatible with. For example, the custom cooking pot may be the only cooking pot that fits on the cooking device. This imposes various limitations, and in particular prevents the user from preparing food using the cooking device with other utensils he/she may have in the kitchen.

More generally, the inclusion of both heating capability and food manipulation functionality may present challenges in terms of providing a cooking device that is relatively lightweight, compact, convenient to use and/or cost-effective to manufacture.

### SUMMARY OF THE INVENTION

The invention is defined by the claims.

According to examples in accordance with an aspect of the invention, there is provided a cooking device for inductively heating a utensil and for driving movement of a utensil mechanical coupling, the cooking device comprising: an induction heating element for inductively heating the utensil; a support member for supporting the utensil while the utensil is being inductively heated by the induction heating element; a motor assembly; a device mechanical coupling for engaging with the utensil mechanical coupling to enable the motor assembly to drive movement of the utensil mechanical coupling; and at least one magnet for magnetically attracting the utensil and/or the utensil mechanical coupling to facilitate engagement of the utensil mechanical coupling with the device mechanical coupling.

The induction heating element may enable food to be heated with minimal impact of operation of the induction heating element on functioning of moving parts involved in driving movement of the utensil mechanical coupling. This is because induction heating does not rely on conduction of heat generated in the induction heating element itself.

The induction heating element may nonetheless risk hampering inclusion of functionality for manipulating food. Whilst a magnetic coupling capable of providing contactless torque transfer may in principle be compatible with the induction heating element, such a magnetic coupling may risk taking up too much space in, and adding excessive weight to, the cooking device.

Whilst such issues may be addressed by the cooking device including a device mechanical coupling for engaging, in other words mechanically engaging, with the utensil mechanical coupling, realizing such engagement in the presence of the induction heating element may still pose challenges. For example, certain conventional ways of mechanically engaging the utensil mechanical coupling may be inconvenient in the context of a cooking device whose use desirably involves relatively quick attachment/detachment of the utensil mechanical coupling, e.g. together with the utensil.

For this reason, the cooking device includes magnet(s) that magnetically attract the utensil and/or the utensil mechanical coupling to facilitate engagement of the utensil mechanical coupling with the device mechanical coupling.

In this way, both induction heating and food manipulation functionality that is straightforward to use may be combined in the same cooking device.

It is noted that the term "to facilitate engagement of the utensil mechanical coupling with the device mechanical coupling" may mean that the at least one magnet assists to bring the utensil mechanical coupling into engagement with the device mechanical coupling and/or assists to retain the engagement of the device mechanical coupling and the utensil mechanical coupling with each other.

In some embodiments, the induction heating element is arranged around the device mechanical coupling. This may enable heating and food manipulation functionality to be incorporated into the cooking device in a spatially efficient manner.

In such embodiments, a space may be defined, e.g. cut or formed in some other way, in the induction heating element, e.g. in a center of the induction heating element, for accommodating the device mechanical coupling.

In some embodiments, the device mechanical coupling comprises a shaft or recess, for example a polygonal or non-rotationally symmetric shaft or recess, for keying to the utensil mechanical coupling.

In such embodiments, the utensil mechanical coupling may include a recess or shaft, for example a polygonal or non-rotationally symmetric recess or shaft, for keying to the shaft or recess of the device mechanical coupling.

The at least one magnet may be arranged on, in and/or around the shaft or recess. This may provide a convenient and straightforwardly implementable way of arranging the magnet(s) to facilitate engagement of the device mechanical coupling with the utensil mechanical coupling.

In some applications relatively strong attraction/retaining forces may be needed between the cooking device and the utensil, for example when kneading dough and/or when the utensil extends to a relatively large height from the support member. It is noted that a relatively tall utensil may be at greater risk of toppling over and hence a stronger retaining force may be required to mitigate this risk.

Accordingly, the cooking device may comprise a retaining system for restricting movement of the utensil relative to the support member during movement of the utensil mechanical coupling.

The retaining system may be configured in any suitable manner. In some embodiments, the retaining system comprises at least one further magnet for coupling to a magnetically attractable portion of the utensil.

The further magnet(s) are preferably arranged around an outside of the induction heating element, e.g. induction coil.

The magnetically attractable portion of the utensil can have any suitable design. In some embodiments, the utensil may include at least one further utensil magnet configured to attract the further magnet(s) of the retaining system.

In such embodiments, the further magnet(s) and the further utensil magnet(s) may be separated from each other, for example by a plastic coating or cover and/or the support member, when the utensil is supported on the support member. In this case, the attraction between the further magnet(s) and the further utensil magnet(s) may be strong enough despite this separation.

In the scenario in which there is no such separation between the further magnet(s) and the magnetically attractable portion of the utensil, the magnetically attractable portion may comprise, e.g. be, a ferromagnetic material, such as ferromagnetic steel.

This is because the force between a magnet and, for example, ferromagnetic steel in contact with the magnet may be comparable to the force between two contacting magnets.

The support member may have an exterior surface for contacting the utensil, in particular when the utensil is being supported by the support element.

In some embodiments, at least part of the device mechanical coupling is configured to protrude beyond the exterior surface at least when engaging with the utensil mechanical coupling. This protrusion may facilitate coupling of the utensil mechanical coupling and the device mechanical coupling with each other.

The at least part of the device mechanical coupling may be moveable, in response to the at least one magnet magnetically attracting the utensil and/or the utensil mechanical coupling, during engagement of the device mechanical coupling with the utensil mechanical coupling. The magnet(s) in combination with the moveable device mechanical coupling may facilitate engagement of the utensil mechanical coupling and the device mechanical coupling with each other.

The at least part of the device mechanical coupling may be retractable towards the support member, e.g. retractable into the cooking device, when the device mechanical coupling and the utensil mechanical coupling are disengaged from each other. This retraction may assist to move the device mechanical coupling out of the way, for example when the cooking device is to be used only for heating food via operation of the induction heating element.

In some embodiments, an exposed surface of the device mechanical coupling, e.g. an exposed surface of a shaft included in the device mechanical coupling, is flush with the exterior surface of the support member at least when the device mechanical coupling and the utensil mechanical coupling are not engaged with each other.

This may facilitate cleaning of the exterior surface, since such cleaning may not be hampered by protrusion of the device mechanical coupling beyond the external surface or depression of the device mechanical coupling to provide a recess or groove relative to the external surface.

In some embodiments, the at least part of the device mechanical coupling is retractable towards the support member, e.g. retractable into the cooking device, under the utensil's weight. In such embodiments, the use of conventional utensils, e.g. receptacles such as pots, that do not include a utensil mechanical coupling may be facilitated, since the weight of the utensil may push the at least part of the device mechanical coupling into the cooking device.

According to another aspect there is provided a cooking assembly comprising: the cooking device according to any of the embodiments described herein; and one or both of: a utensil for being inductively heated by the induction heating element; and a utensil mechanical coupling, the utensil and/or the utensil mechanical coupling being magnetically attractable to the at least one magnet to facilitate engagement of the utensil mechanical coupling with the device mechanical coupling.

In some embodiments, the cooking assembly comprises a food implement for coupling to, and being moveable by movement of, the utensil mechanical coupling.

The food implement can have any suitable design. In some embodiments, the food implement is in the form of a food processing tool, a blender tool, a stirrer tool, a cutter, a dough kneader or a mixer.

It is also noted that the utensil can be of any suitable type. In some embodiments, the utensil comprises a receptacle in which food is receivable, e.g. in order to be heated via the cooking device's induction heating element.

In some embodiments, the utensil mechanical coupling is arranged so that the movement of the utensil mechanical coupling enables manipulation of food also being heated via operation of the induction heating element.

For example, a food implement may be arranged or arrangeable within the receptacle, with the utensil mechanical coupling being arranged to move, e.g. rotate, the food implement within the receptacle.

In such embodiments, the food implement may be moved to manipulate the food within the receptacle while the food is being heated via operation of the induction heating element.

In some embodiments, at least one utensil magnet is included in the utensil and/or the utensil mechanical coupling for attracting the at least one magnet to facilitate engagement of the utensil mechanical coupling with the device mechanical coupling. This may assist to strengthen the connection between the device mechanical coupling and the utensil mechanical coupling, particularly in embodiments in which the magnet(s) are not in direct contact with the relevant part of the utensil and/or the utensil mechanical coupling.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIGs. 1A and 1B schematically depict a cooking assembly according to a first example;
FIG. 2 schematically depicts a cooking assembly according to a second example;
FIG. 3 provides a schematic plan view of a device mechanical coupling according to an example;
FIG. 4 provides a schematic plan view of a utensil mechanical coupling for engaging with the device mechanical coupling shown in FIG. 3;
FIGs. 5A and 5B schematically depict a cooking assembly according to a third example;
FIG. 6 provides a schematic perspective view of a device mechanical coupling included in the cooking assembly shown in FIGs. 5A and 5B;
FIG. 7 schematically depicts a cooking device according to an example; and
FIG. 8 schematically depicts a cooking assembly according to a fourth example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cooking device for inductively heating a utensil and for driving movement of a utensil mechanical coupling. The cooking device comprises an induction heating element for inductively heating the utensil, and a support member for supporting the utensil while the utensil is being inductively heated by the induction heating element. The cooking device also comprises a motor assembly, and a device mechanical coupling for engaging with the utensil mechanical coupling to enable the motor assembly to drive movement of the utensil mechanical coupling. The cooking device further comprises at least one magnet for magnetically attracting the utensil and/or the utensil mechanical coupling to facilitate, e.g. to assist in retaining, engagement of the utensil mechanical coupling with the device mechanical coupling. Further provided is a cooking assembly comprising the cooking device and one or both of the utensil and the utensil mechanical coupling.

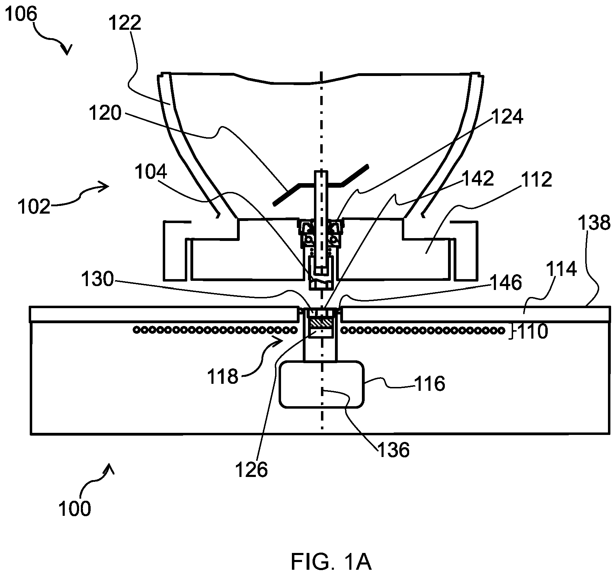

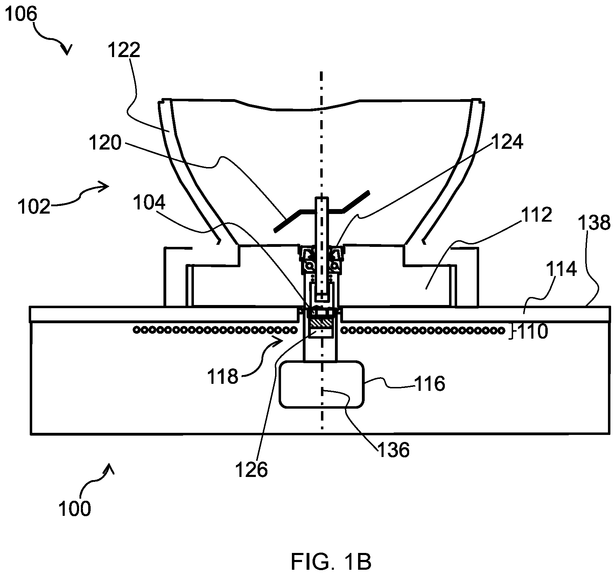

FIGs. 1A and 1B schematically depict a cooking device 100 according to an example. The cooking device 100 is suitable for inductively heating a utensil 102, as well as being suitable for driving movement of a utensil mechanical coupling 104.

The cooking device 100 may, for example, be regarded as a base station.

Such a base station may support, e.g. may be compatible with, various types of utensils 102.

The present disclosure is partly directed to the cooking device 100 per se, since the cooking device 100 can in principle be supplied to the user separately from the utensil 102 and the utensil mechanical coupling 104.

The present disclosure is also directed to a cooking assembly 106 comprising the cooking device 100 and one or both of the utensil 102 and the utensil mechanical coupling 104. Thus, the user may be conveniently supplied with the cooking device 100 together with the utensil 102 and/or the utensil mechanical coupling 104.

The cooking device 100 comprises an induction heating element 110, e.g. an induction coil, for inductively heating the utensil 102. The induction heating element 110 may enable food to be heated with minimal impact of operation of the induction heating element 110 on functioning of moving parts involved in driving movement of the utensil mechanical coupling 104. This is because induction heating does not rely on conduction of heat generated in the induction heating element itself.

Implicit in the utensil 102 being inductively heated by the induction heating element 110 is that the utensil 102 comprises an electrically conductive material 112, for example an electrically conductive and ferromagnetic material 112, in which heat can be induced by operation of the induction heating element 110.

Heat induced, due to the induction heating element 110, in the utensil's 102 electrically conductive material 112 may be transferred to food in contact with the utensil 102 via thermal conduction.

The cooking device 100 comprises a support member 114 for supporting the utensil 102 while the utensil 102 is being inductively heated by the induction heating element 110. For example, the induction heating element 110 may be arranged beneath the support member 114.

In at least some embodiments, such as shown in FIGs. 1A and 1B, the support member 114 comprises, e.g. is in the form of, a support plate on which the utensil 102 is supportable.

The support member 114 may be formed from any suitable material that enables the utensil 102 to be inductively heated by the induction heating element 110. In some embodiments, the support member 114 is formed from glass.

As well as being compatible with induction heating, glass may benefit from being relatively easy to clean. Any suitable glass, e.g. glass-ceramic, can be used to form the support member 114, for example Ceran^{®} glass from Schott Ceran.

The cooking device 100 further comprises a motor assembly 116, and a device mechanical coupling 118 for engaging with the utensil mechanical coupling 104 to enable the motor assembly 116 to drive movement of the utensil mechanical coupling 104. The design of the device mechanical coupling 118 will be described in more detail herein below.

The motor assembly 116 may include at least one motor. The motor(s) may be of any suitable type. In some embodiments, the motor assembly 116 comprises at least one brushless DC motor.

A food implement 120 for contacting and processing food may be coupled to, and may thus be moveable by movement of, the utensil mechanical coupling 104.

The food implement 120 can have any suitable design. In some embodiments, the food implement 120 is in the form of a food processing tool, a blender tool (as shown in FIGs. 1A and 1B), a stirrer tool, a cutter, a dough kneader or a mixer.

The utensil 102 can be of any suitable type. In some embodiments, the utensil 102 comprises a receptacle 122 in which food is receivable in order to be heated by heat transferred from the utensil's 102 electrically conductive material 112.

In some embodiments, such as shown in FIGs. 1A and 1B, the utensil mechanical coupling 104 is arranged so that the movement of the utensil mechanical coupling 104 enables manipulation of food also being heated via inductive heating of the utensil 102 by the induction heating element 110. For example, the food implement 120 may be arranged or arrangeable within the receptacle 122, with the utensil mechanical coupling 104 being arranged to move, e.g. rotate, the food implement 120 within the receptacle 122.

Thus, the food implement 120 may be moved to manipulate the food within the receptacle 122 while the food is being heated, by operation of the induction heating element 110.

In some embodiments, such as shown in FIGs. 1A and 1B, the utensil 102 comprises a sealing member 124 for providing a seal between a food supporting region of the utensil 102 and one or both of the utensil mechanical coupling 104 and the food implement 120.

The seal member 124 may minimize the risk of the utensil mechanical coupling 104 being contaminated by food in/on the utensil 102.

In at least some embodiments, such as shown in FIGs. 1A and 1B, the induction heating element 110 is arranged around the device mechanical coupling 118. This may enable heating and food manipulation functionality to be incorporated into the cooking device 100 in a spatially efficient manner.

In such embodiments, a space may be defined, e.g. cut or formed in some other way, in the induction heating element 110, e.g. in a center of the induction heating element 110, for accommodating the device mechanical coupling 118.

More generally, the cooking device 100 comprises at least one magnet 126 for magnetically attracting the utensil 102 and/or the utensil mechanical coupling 104 to facilitate engagement of the utensil mechanical coupling 104 with the device mechanical coupling 118.

The term "to facilitate engagement of the utensil mechanical coupling 104 with the device mechanical coupling 118" may mean that the at least one magnet 126 assists to bring the utensil mechanical coupling 104 into engagement with the device mechanical coupling and/or assists to retain the engagement of the device mechanical coupling 118 and the utensil mechanical coupling 104 with each other.

Thus, the cooking device 100 according to the present disclosure includes a magnet 126 in combination with a device mechanical coupling 118.

The magnet 126 and the device mechanical coupling 118 may be integrated in the cooking device 100 together with a drive train and an induction heater plate defined by the induction heating element 110 and the support member 114.

The drive mechanical coupling 118 may transfer torque and the magnet 126 may hold the drive mechanical coupling 118 and the utensil mechanical coupling 104 of an accessory.

The device mechanical coupling 118 in combination with the magnet(s) 126 may offer various advantages, such as convenient attachment and release of the utensil(s) 102 and/or utensil mechanical coupling(s) 104, e.g. cooking accessories. This attachment and release may be more convenient than in the case of, for example, a pure magnetic coupling because the attractive force may be smaller than such a pure magnetic coupling.

The cooking device 100 may also be more lightweight and less expensive due to not requiring a relatively heavy magnetic coupling. The same may be true of the cooking accessories. Production costs may be correspondingly lower.

Furthermore, more space may be provided for heat conduction and for the induction heating element 110, e.g. for induction coil surface, since the diameter of the device mechanical coupling 118 may be smaller than that of a pure magnetic coupling, and no gap between magnets may be required, hence there may be relatively efficient use of magnetic attractive force provided by the magnet(s) 126.

It is noted that the at least one magnet 126 may be of any suitable type. In some embodiments, such as shown in FIGs. 1A and 1B, the at least one magnet 126 includes at least one permanent magnet 126 (noting that the poles of such a permanent magnet 126 are represented in FIGs. 1A and 1B via a patterned portion above a non-patterned white portion).

Alternatively or additionally, the magnet(s) 126 may include an electromagnet.

FIG. 1A shows the utensil mechanical coupling 104 and the device mechanical coupling 118 spatially separated from each other, which is in this particular case associated with the utensil 102 not being supported by the support member 114.

As the device mechanical coupling 118 is approached by the utensil mechanical coupling 104, e.g. when the utensil 102 is brought towards the support member 114, the at least one magnet 126 magnetically attracts the utensil 102 and/or the utensil mechanical coupling 104 to bring the utensil mechanical coupling 104 into mechanical engagement with the device mechanical coupling 118. This engagement is schematically depicted in FIG. 1B.

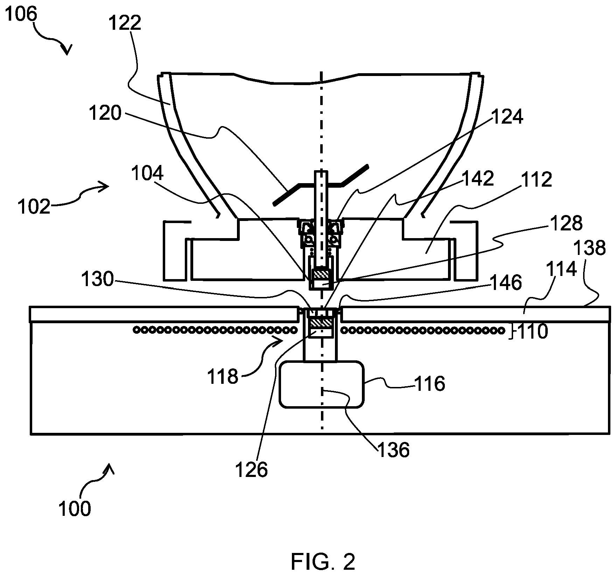

Implicit in the utensil 102 and/or the utensil mechanical coupling 104 being magnetically attracted by the magnet(s) 126 is that the utensil 102 and/or the utensil mechanical coupling 104 include(s) a suitable material, for example a ferromagnetic material, such as ferromagnetic steel. As an alternative or in addition to such a ferromagnetic material, and referring now to FIG. 2, at least one utensil magnet 128 may be included in the utensil 102 and/or the utensil mechanical coupling 104 for attracting the at least one magnet 126 to bring the utensil mechanical coupling 104 into engagement with the device mechanical coupling 118. Inclusion of the utensil magnet(s) 128 may assist to strengthen the connection between the device mechanical coupling 118 and the utensil mechanical coupling 104.

The device mechanical coupling 118, and correspondingly the utensil mechanical coupling 104, can be configured in any suitable manner provided that the device mechanical coupling 118 and the utensil mechanical coupling 104 can mechanically engage with each other to enable the device mechanical coupling 118 to transfer drive from the motor assembly 116 to the utensil mechanical coupling 104.

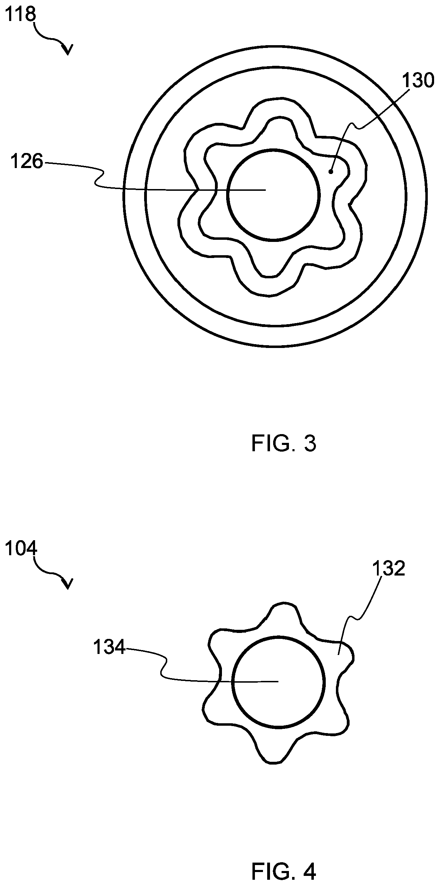

In some embodiments, and referring to FIG. 3, the device mechanical coupling 118 comprises, e.g. is in the form of, a shaft or recess 130, for example a polygonal or non-rotationally symmetric shaft or recess 130, for keying to the utensil mechanical coupling 104.

In such embodiments, and referring to FIG. 4, the utensil mechanical coupling 104 may include, e.g. be in the form of, a recess or shaft 132, for example a polygonal or non-rotationally symmetric recess or shaft 132, for keying to the shaft or recess 130 of the device mechanical coupling 118.

When the device mechanical coupling 118 includes such a shaft or recess 130, the magnet(s) 126 may be arranged on, in and/or around the shaft or recess 130.

In the non-limiting example depicted in FIG. 3, the magnet(s) 126 is/are set into the recess 130 and are arranged to face an opening of the recess 130 by which a shaft 132 of the utensil mechanical coupling 104 can be admitted into, and engage with surface(s) delimiting, the recess 130.

In such embodiments, and referring to FIG. 4, a magnetically attractable portion 134, e.g. comprising a ferromagnetic material or utensil magnet(s) 128, may be arranged on an end of the shaft 132, so as to face the magnet(s) 126 set into the recess 130 when the shaft 132 is received in the recess 130.

This may provide a relatively straightforwardly implementable way of arranging the magnet(s) 126 so that the magnet(s) 126 magnetically attract the utensil 102 and/or the utensil mechanical coupling 104 to facilitate mechanical engagement of the utensil mechanical coupling 104 with the device mechanical coupling 118.

In some embodiments, such as shown in FIGs. 1A, 1B, 2, 5A and 5B, the device mechanical coupling 118 is rotatable about an axis 136, e.g. about a motor axis 136.

In such embodiments, at least part of the device mechanical coupling 118 may be moveable along the axis 136 by the at least one magnet 126 magnetically attracting the utensil mechanical coupling 104 into engagement with the device mechanical coupling 118.

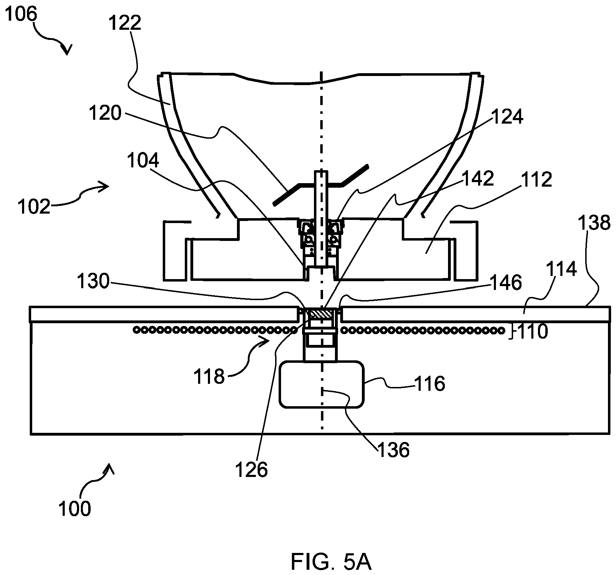

FIG. 5A schematically depicts the utensil mechanical coupling 104 and the device mechanical coupling 118 spatially separated from each other, which is in this particular case associated with the utensil 102 not being supported by the support member 114. In this configuration, the at least part of the device mechanical coupling 118 may be retracted into the cooking device 100.

As the device mechanical coupling 118 is approached by the utensil mechanical coupling 104, e.g. when the utensil 102 is brought towards the support member 114, the at least one magnet 126 magnetically attracts the utensil 102 and/or the utensil mechanical coupling 104 to move the at least part of the device mechanical coupling 118 along the axis 136 towards the utensil mechanical coupling 104.

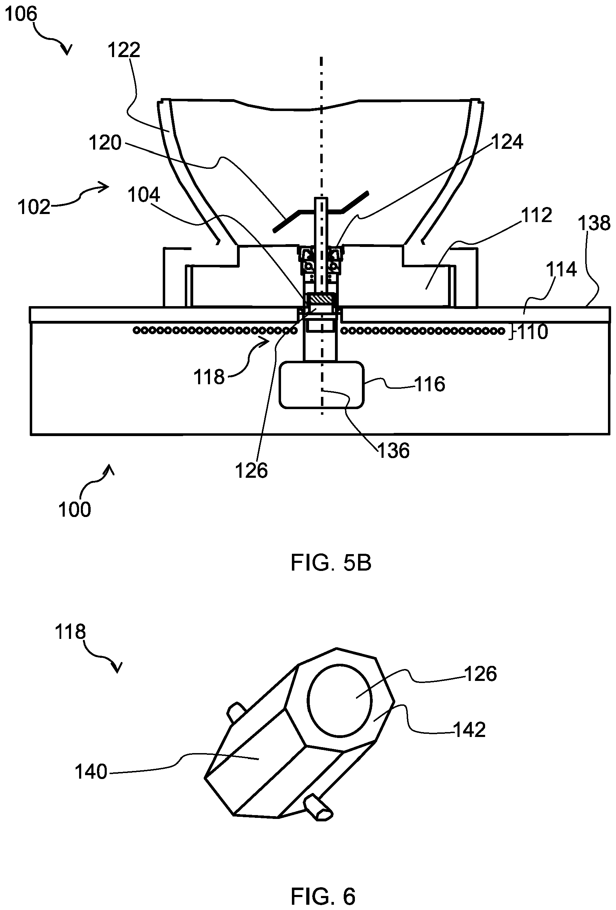

This movement may lead to mechanical engagement of the utensil mechanical coupling 104 and the device mechanical coupling 118 with each other, as shown in FIG. 5B.

Alternatively or additionally, the at least part of the device mechanical coupling 118 may be configured to protrude beyond the support member's 114 exterior surface 138 at least when the device mechanical coupling 118 is engaging with the utensil mechanical coupling 104.

In such embodiments, and still referring to FIGs. 5A and 5B, the at least part of the device mechanical coupling 118 may be moveable, in response to the at least one magnet 126 magnetically attracting the utensil 102 and/or the utensil mechanical coupling 104, to protrude beyond the exterior surface 138 of the support member 114.

As shown in FIG. 5A, the at least part of the device mechanical coupling 118 may be retractable towards the support member 114, e.g. retractable into the cooking device 100, when the device mechanical coupling 118 and the utensil mechanical coupling 104 are disengaged from each other. This retraction may assist to move the device mechanical coupling 118 out of the way, for example when the cooking device 100 is to be used only for heating food via operation of the induction heating element 110.

FIG. 6 provides a schematic perspective view of a device mechanical coupling 118 according to a non-limiting example that can be included in the cooking device 100 according to the embodiment shown in FIGs. 5A and 5B. In particular, the device mechanical coupling 118 shown in FIG. 6 comprises a polygonal shaft 140 that can protrude beyond the support member's 114 exterior surface 138 at least when the device mechanical coupling 118 is engaging with the utensil mechanical coupling 104. The polygonal shaft 140 may thus be received in, and engage with surface(s) delimiting, a recess of the utensil mechanical coupling 104.

It is also noted that in such an example, the magnet(s) 126 may be arranged on an end of the shaft 140.

In some embodiments, and referring to FIGs. 5A and 6, an exposed surface 142 of the device mechanical coupling 118, e.g. an exposed surface 142 of a shaft 140 included in the device mechanical coupling 118, is flush with the support member's 114 exterior surface 138 when the at least part of the device mechanical coupling 118 is retracted. This may facilitate cleaning of the exterior surface 138, since such cleaning may not be hampered by protrusion of the device mechanical coupling 118 beyond the external surface 138 or depression of the device mechanical coupling 118 to provide a recess or groove relative to the external surface 138.

Thus, the exterior surface 138, e.g. the visible surface of the device mechanical coupling 118, may be in the same plane as the exterior surface 138 of the support member 114, e.g. support plate. The absence of any protrusion or groove may facilitate cleaning of the external surface 138.

As shown in FIG. 5B, the at least part of the device mechanical coupling 118, e.g. slider clutch, may be extracted, in other words protrude beyond the external surface 138, by the magnetic attraction of the magnet(s) 126 with the utensil 102 and/or the utensil mechanical coupling 104, e.g. an upper iron clutch of the utensil 102.

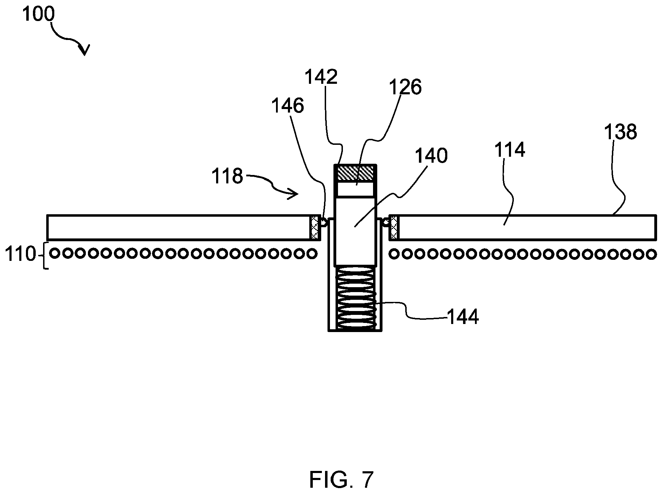

In some embodiments, such as shown in FIG. 7, the at least part of the device mechanical coupling 118 is retractable towards the support member 114, e.g. retractable into the cooking device 100, under the utensil's 102 weight. Use of conventional utensils 102, e.g. receptacles such as pots, that do not include a utensil mechanical coupling 104 may be facilitated, since the weight of the utensil 102 may push the at least part of the device mechanical coupling 118 into the cooking device 100, e.g. base station.

The at least part of the device mechanical coupling 118 may be biased into protruding beyond the external surface 138, e.g. with a suitable biasing element 144, such as a spring.

This biasing may be overcome to cause retraction of the at least part of the device mechanical coupling 118 towards the exterior surface 138, e.g. into the cooking device 100, under the weight of the utensil 102.

More generally, and as best shown in FIG. 7, the support member 114 may delimit an opening, with the device mechanical coupling 118 and the utensil mechanical coupling 104 engaging with each other via the opening, e.g. by at least one of the device mechanical coupling 118 and the utensil mechanical coupling 104 being disposed in the opening.

Alternatively or additionally, the cooking device 100 may include a sealing element 146 between the support member 114 and the device mechanical coupling 118.

In some embodiments, and as best shown in FIG. 7, the sealing element 146 is arranged to seal the opening delimited by the support member 114.

The sealing element 146 may assist to minimize the risk of ingress of debris into the cooking device 100, e.g. base station.

No groove in which debris can collect may be present in at least some of the embodiments described herein, including in the embodiment shown in FIG. 7.

In some applications relatively strong attraction/retaining forces may be needed between the cooking device 100, e.g. base station, and the utensil 102, for example when kneading dough and/or when the utensil 102, e.g. the receptacle 122, extends to a relatively large height from the support member 114. It is noted that a relatively tall utensil 102, e.g. receptacle 122, may be at greater risk of toppling over and hence a stronger retaining force may be required to mitigate this risk.

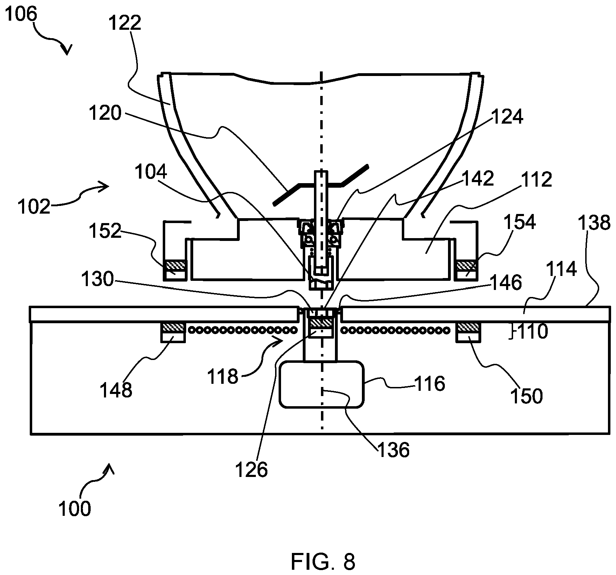

Accordingly, in some embodiments, such as shown in FIG. 8, the cooking device 100 comprises a retaining system for restricting movement of the utensil 102 relative to the support member 114 during movement of the utensil mechanical coupling 104.

The retaining system may be configured in any suitable manner. In some embodiments, such as shown in FIG. 8, the retaining system comprises at least one further magnet 148, 150 for coupling to a magnetically attractable portion of the utensil 102.

The further magnet(s) 148, 150 are preferably arranged around an outside of the induction heating element 110, e.g. induction coil.

The magnetically attractable portion of the utensil 102 can have any suitable design. In some embodiments, such as shown in FIG. 8, the utensil 102 may include at least one further utensil magnet 152, 154 configured to attract the further magnet(s) 148, 150 of the cooking device's 100 retaining system.

In such embodiments, the further magnet(s) 148, 150 and the further utensil magnet(s) 152, 154 may be separated from each other, for example by a plastic coating or cover and/or the support member 114, when the utensil 102 is supported on the support member 114. In this case, the attraction between the further magnet(s) 148, 150 and the further utensil magnet(s) 152, 154 may be strong enough despite this separation.

In the scenario in which there is no such separation between the further magnet(s) 148, 150 and the magnetically attractable portion of the utensil 102, the magnetically attractable portion may comprise, e.g. be, a ferromagnetic material, such as ferromagnetic steel.

This is because the force between a magnet and, for example, ferromagnetic steel in contact with the magnet may be comparable to the force between two contacting magnets.

More generally, the cooking device 100 and/or cooking assembly 106 according to the present disclosure may offer various advantages, such as a single motor-comprising and heating device 100 for custom utensils 102, such as utensils 102 comprising the utensil mechanical coupling 104, as well as for existing utensils 102, e.g. shelf pots; no bayonet coupling may need to be employed; capability to minimize the number of cooking appliances in the user's kitchen, e.g. due to no extra kettle, milk frother, etc. being required; ease of cleaning, e.g. due to the external surface 138 of the support member 114 being substantially flat, e.g. with only a relatively small discontinuity where the device mechanical coupling 118 is arranged; and various types of utensils 102 and food implements 120 being supportable by the cooking device 100 and various cooking possibilities being enabled.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cooking device (100) for inductively heating a utensil (102) and for driving movement of a utensil mechanical coupling (104), the cooking device comprising:
an induction heating element (110) for inductively heating the utensil;
a support member (114) for supporting the utensil while the utensil is being inductively heated by the induction heating element;
a motor assembly (116);
a device mechanical coupling (118) for engaging with the utensil mechanical coupling to enable the motor assembly to drive movement of the utensil mechanical coupling; and
at least one magnet (126) for magnetically attracting the utensil and/or the utensil mechanical coupling to facilitate engagement of the utensil mechanical coupling with the device mechanical coupling.

2. The cooking device (100) according to claim 1, wherein the induction heating element (110) is arranged around the device mechanical coupling (118).

3. The cooking device (100) according to claim 1 or claim 2, wherein the device mechanical coupling (118) comprises a shaft or recess (130) for keying to the utensil mechanical coupling (104), the at least one magnet (126) being arranged on, in and/or around the shaft or recess.

4. The cooking device (100) according to claim 3, comprising a retaining system for restricting movement of the utensil (102) relative to the support member (114) during said movement of the utensil mechanical coupling (104).

5. The cooking device (100) according to claim 4, wherein the retaining system comprises at least one further magnet (148, 150) for coupling to a magnetically attractable portion (152, 154) of the utensil (102).

6. The cooking device (100) according to any one of claims 1 to 5, wherein at least part of the device mechanical coupling (118) is moveable, in response to the at least one magnet (126) magnetically attracting the utensil (102) and/or the utensil mechanical coupling (104), during engagement of the device mechanical coupling with the utensil mechanical coupling.

7. The cooking device (100) according to any one of claims 1 to 6, wherein at least part of the device mechanical coupling (118) is configured to protrude beyond the support member's (114) exterior surface (138) at least when engaging with the utensil mechanical coupling (104).

8. The cooking device (100) according to claim 7, wherein the at least part of the device mechanical coupling (118) is retractable towards the support member (114) under the utensil's (102) weight.

9. The cooking device (100) according to any one of claims 1 to 7, wherein at least part of the device mechanical coupling (118) is retractable towards the support member (114) when the device mechanical coupling and the utensil mechanical coupling (104) are disengaged from each other.

10. The cooking device (100) according to any one of claims 1 to 7 and 9, wherein an exposed surface (142) of the device mechanical coupling (118) is flush with the support member's (114) exterior surface (138) at least when the device mechanical coupling and the utensil mechanical coupling (104) are not engaged with each other.

11. A cooking assembly (106) comprising:
the cooking device (100) according to any one of claims 1 to 10; and
one or both of:
a utensil (102) for being inductively heated by the induction heating element (110); and
a utensil mechanical coupling (104), the utensil and/or the utensil mechanical coupling being magnetically attractable to the at least one magnet (126) to facilitate engagement of the utensil mechanical coupling with the device mechanical coupling (118).

12. The cooking assembly (106) according to claim 11, wherein the utensil (102) and the utensil mechanical coupling (104) are included in the cooking assembly, and the utensil mechanical coupling is arranged so that the movement of the utensil mechanical coupling enables manipulation of food also being heated via inductive heating of the utensil by the induction heating element (110).

13. The cooking assembly (106) according to claim 11 or claim 12, wherein at least one utensil magnet (128) is included in the utensil (102) and/or the utensil mechanical coupling (104) for attracting the at least one magnet (126) to facilitate engagement of the utensil mechanical coupling with the device mechanical coupling (118).

14. The cooking assembly (106) according to any one of claims 11 to 13, wherein the utensil mechanical coupling (104) is included in the cooking assembly and comprises a recess or shaft (132) for keying to the device mechanical coupling's shaft or recess (130) respectively.

15. The cooking assembly (106) according to any one of claims 10 to 13, comprising a food implement (120) for coupling to, and being moveable by movement of, the utensil mechanical coupling (104); optionally wherein the food implement is in the form of a food processing tool, a blender tool, a stirrer tool, a cutter, a dough kneader or a mixer.
